# EUROPÄISCHE PATENTANMELDUNG

(11) **EP 0 692 651 A1**
(43) Veröffentlichungstag der Anmeldung: **17.01.1996**
(21) Anmeldenummer: 95105164.8
(22) Anmeldetag: 06.04.1995
(51) Int. Cl.: F16D 65/32, B60T 17/08

(54) **Bremszylinder für Scheibenbremsen, insbesondere von Nutzfahrzeugen**

(30) Priorität: 13.07.1994 DE 4424721
(71) Anmelder: KNORR-BREMSE SYSTEME FÜR NUTZFAHRZEUGE GmbH, D-80809 München (DE)
(72) Erfinder: Tschewik, Herbert, D-85778 Haimhausen (DE); Siebke, Alf, D-80333 München (DE)

(57) **Zusammenfassung**

Bei einer Anordnung zur Betätigung von Scheibenbremsen, insbesondere für Nutzfahrzeuge, ist in einem an das Gehäuse der Scheibenbremse angeflanschten Betätigungszylinder eine Dichtungseinrichtung vorgesehen, welche das Innere des im allgemeinen mit Außenluft in Verbindung stehenden Betätigungszylinders gegenüber dem Inneren der angeschlossenen Scheibenbremsanlage abdichtet. Der Betätigungszylinder besteht als Betriebsbremszylinder (1), dessen vorzugsweise einen Stößel (11) tragendes, mit einem Membranteller (7) verbundenes Druckstück (9) durch eine Balgdichtung (13) umschlossen ist. Ein Ende der als Faltenbalg (21) oder Rollbalg (23) ausgebildeten Balgdichtung (13) umfaßt als Dichtwulst (25) das Druckstück (9) und ist in einer Nut (27) desselben geführt, während das entgegengesetzte Ende der Balgdichtung in einer das Druckstück (9) bzw. den Stößel (11) umgebenden Weise am Deckel (31) des Betriebsbremszylinders (1) aufgeknüpft ist. Die Balgdichtung (13) dient gleichzeitig als Federzentrierung für die Rückstellfeder (35) des Betriebsbremszylinders (1), wobei die Rückstellfeder (35) an der Innenseite des Deckels (31) an einer Außenschulter (37) der Balgdichtung anliegt.

## Beschreibung

Die Erfindung betrifft einen Bremszylinder nach dem Gattungsbegriff des Patentanspruches 1.

Bei Scheibenbremsanlagen von Nutzfahrzeugen sind Betätigungszylinder vorgesehen, welche am Gehäuse der Scheibenbremse angeflanscht sind, wobei sich eine Kolbenstange bzw. ein Druckstück des Bremszylinders durch die angrenzenden Flanschflächen erstreckt und auf Betätigungselemente der Scheibenbremse einzuwirken vermag. Bremszylinder der in Rede stehenden Art besitzen im allgemeinen eine zur Außenluft führende Verbindung, derart, daß die die Kolbenstange umschließende Kammer bei Bremsbetätigung bzw. Rückführung gemäß den hierbei auftretenden Volumenveränderungen "atmet". Mit der Außenluft gelangen Schmutzteilchen und Feuchtigkeit in das Innere des Bremszylinders; bei robuster Bauweise stellt dies im allgemeinen kein Problem dar, bei Verwendung an Scheibenbremsen ist jedoch in jedem Fall sicherzustellen, daß das Eindringen von Schmutzteilchen und Feuchtigkeit in das Innere des Scheibenbremsgehäuses verhindert wird.

Davon ausgehend besteht die Aufgabe der Erfindung darin, einen Bremszylinder der in Rede stehenden Art mit einfachen Mitteln so auszugestalten, daß den vorstehend genannten Anforderungen Rechnung getragen wird d.h. daß eine wirksame Abdichtung des Inneren der Scheibenbremse gegenüber Außenluft erreicht wird.

Zur Lösung dieser Aufgabe dienen die Merkmale nach dem Kennzeichnungsteil des Patentanspruches 1.

Die das Druckstück bzw. die Kolbenstange des Bremszylinders wenigstens auf einem Teil der axialen Erstreckung umschließende Balgdichtung, welche als Faltenbalg oder als Rollbalg ausgebildet sein kann, vermittelt in konstruktiv einfacher und fertigungstechnisch billiger Weise die Möglichkeit der Abdichtung am Außenumfang des Druckstücks und am Innenumfang der vom Druckstück durchsetzten Öffnung im Bereich der Anflanschflächen von Scheibenbremse und Bremszylinder; gleichzeitig dient die Balgdichtung als Zentriermittel für die von ihr umgebene Rückstellfeder, welche zur Rückführung der Betätigungsorgane bei Entlüftung des Bremszylinders dient. Hierbei liegt die Rückstellfeder an der Außenkante des im Bereich der Durchführung aufgeknüpften Dichtwulstes, was eine einfache Lagezentrierung gewährleistet. Der Balgkörper ist in herkömmlicher Weise aus Gummi oder aus Kunststoff gefertigt; er kann auch in Bereichen starker Beanspruchung verstärkt ausgebildet werden.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Fig.1 ist eine Längsschnittansicht durch einen als Bremszylinder vorgesehenen Kombizylinder unter Verwendung der im Betriebsbremszylinder desselben angeordneten Balgdichtung nach der Erfindung;
Fig.2 ist eine gegenüber Fig.1 vergrößerte Einzel-Schnittansicht der als Faltenbalg ausgebildeten Balgdichtung; und
Fig.3 ist eine der Fig.2 vergleichbare Schnittansicht unter Darstellung der Balgdichtung als Rollbalg.

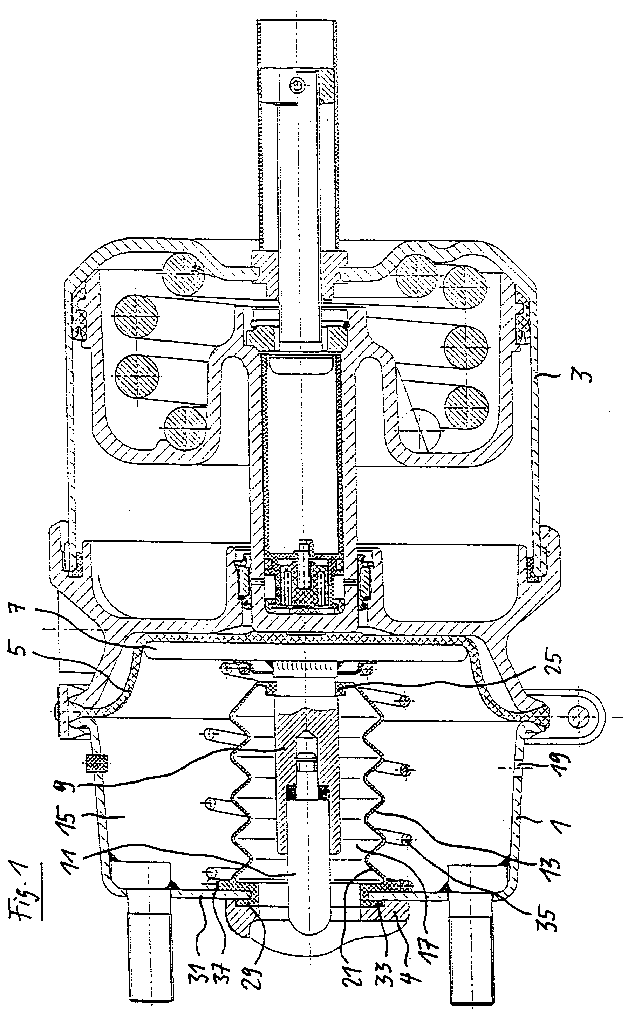

In Fig.1 der Zeichnung ist ein an sich bekannter Betätigungszylinder dargestellt, welcher zur Betätigung von Scheibenbremsen verwendbar ist. Der Betätigungszylinder ist als sogenannter Kombizylinder ausgebildet, d. h. er besteht aus einem Betriebsbremszylinder 1 und aus einem Federspeicherbremszylinder 3. Die grundsätzlichen Elemente des Kombizylinders der dargestellten Art sind an sich bekannt, weshalb sich eine ins einzelne gehende Beschreibung derselben erübrigt.

Der dargestellte Kombizylinder ist am Gehäuse 4 einer (im weiteren nicht dargestellten) Scheibenbremse mit Hilfe von Bolzen 5 anschraubbar, derart, daß die Scheibenbremse und der Kombizylinder eine funktionelle Einheit bilden. Der zur normalen Betriebsbremsbetätigung der Scheibenbremse eines Fahrzeugs, vorzugsweise eines Nutzfahrzeugs, dienende Betriebsbremszylinder 1 weist in seinem Inneren eine Membrane 5 auf, an welcher ein Membranteller 7 von an sich bekannter Konstruktion und Wirkungsweise anliegt. Der Membranteller ist mit einem Druckstück 9 verbunden, welchem ein unmittelbar auf ein Betätigungsorgan der Scheibenbremse einwirkender Stößel 11 zugehört. Das Druckstück und der Stößel sind gemäß der Erfindung von einer Balgdichtung 13 umgeben, welche die außerhalb der Balgdichtung befindliche Kammer 15 gegenüber der innerhalb der Balgdichtung befindlichen Kammer 17 abdichtet; die Kammer 15 "atmet" bei Betätigung des Betriebsbremszylinders d.h. Verschiebung des Membrantellers 7 durch die an der Unterseite des Gehäuses des Betriebsbremszylinders dargestellte Öffnung 19, durch welche Feuchtigkeit und Schmutzteilchen in das Innere des Betriebsbremszylinders gelangen können. Mit Hilfe der Balgdichtung wird demzufolge verhindert, daß derartige Verunreinigungen oder Feuchtigkeit in die Kammer 17 gelangen, welche in offener Verbindung mit dem im übrigen abgedichteten Inneren der Scheibenbremse steht. Die Aufgabe der Balgdichtung besteht also primär darin, das Innere der angeflanschten Scheibenbremse gegenüber Fremdteilchen etc. Feuchtigkeit zu schützen und somit die Funktionsfähigkeit langfristig zu gewährleisten.

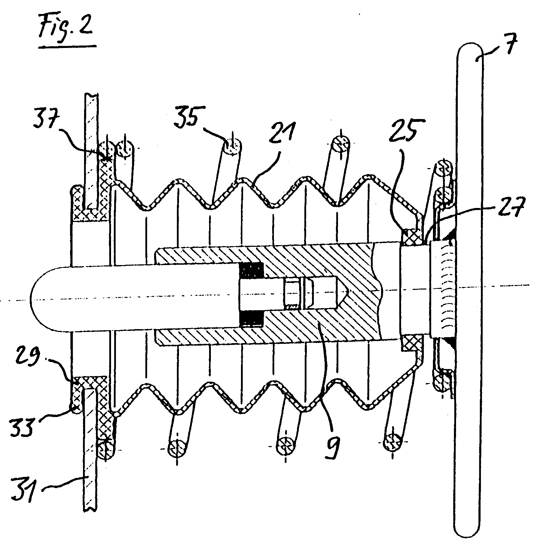

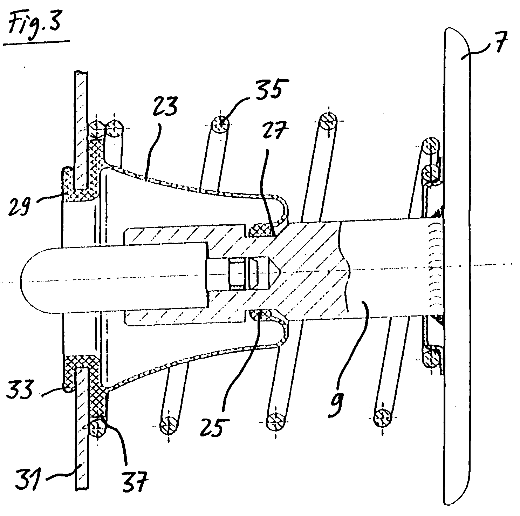

Die Balgdichtung 13 kann in der aus Fig.2 und 3 ersichtlichen Weise als Faltenbalg 21 (Fig.2) oder als Rollbalg 23 (Fig.3) ausgebildet sein. Die Balgdichtung weist in der aus Fig.2 und 3 ersichtlichen Weise eine Abdichtung gegenüber dem Druckstück auf; diese besteht aus einem Dichtwulst 25, welche unter radialer Vorspannung in einer Nut 27 des Druckstücks fixiert ist. Am entgegengesetzten Ende besteht die Abdichtung aus einem weiteren Dichtwulst 29, welcher in gleicher Weise wie der Dichtwulst 25 materialeinheitlich mit dem Falten- bzw. Rollbalg 21, 23 ausgebildet ist. Der Dichtwulst 29 ist im Bereich der mittigen Öffnung auf den Deckel 31 des Betriebsbremszylinders aufgeknüpft, wobei der Dichtwulst an der Dichtfläche des Deckels beliebige Formgebung aufweisen kann, so z. B. die Form eines O-Rings, eines Vierkant-Rings etc.. Im in Fig.2 und 3 dargestellten Ausführungsbeispiel ist im Bereich der Dichtfläche ein O-Ring 33 angeformt, welcher unter Vorspannung gegenüber der zugewandten Dichtfläche des Deckels und gegenüber dem in der Zeichnung linksseitig anliegenden Gehäuse 4 der Scheibenbremse angepreßt ist und hierdurch zusammen mit dem Dichtwulst 25 die wirksame Abdichtung zwischen den Kammern 15 und 17 herbeiführt. Da der O-Ring (Fig.2 und 3) beidseitig wirkt, wird auch vermieden, daß Außenluft von außerhalb des Deckels 31 in das Innere der Scheibenbremse gelangen kann.

Die Balgdichtung 13 dient auch als Federzentrierung für die sie umgebende Rückstellfeder 35, d.h. im Bereich des Dichtwulstes 29 ist innenseitig eine Außenschulter 37 vorgesehen, welche als Anlage und Zentrierung für die Rückstellfeder 35 dient.

Die Balgdichtung nach der Erfindung ist als wesentlicher Beitrag zur Verbilligung und Montagevereinfachung für Betätigungszlinder der in der Rede stehenden Art anzusehen, welche insbeondere für Scheibenhremsbetätigung vorgesehen sind. Der Balgkörper, die Dichtwülste an ihren axialen Enden und die Federzentrierung sind insgesamt in einem Teil verwirklicht, was als Maßnahme für die vorgenannte Verbilligung anzusehen ist. Es ist im übrigen keine Fehlmontage der Einzelelemente möglich, da diese an einem einzelnen Bauteil ausgebildet sind. Zusätzliche Dichtungselemente zwischen der Kammer 15 und der Kammer 17 sind bei Verwendung der Balgdichtung nicht erforderlich, auch dies trägt zu einer Verbilligung der gesamten Anordnung bei.

### Bezugszeichenliste

- 1: Betriebsbremszylinder
- 3: Federspeicherbremszylinder
- 4: Gehäuse
- 5: Membrane
- 7: Membranteller
- 9: Druckstück
- 11: Stößel
- 13: Balgdichtung
- 15: Kammer
- 17: Kammer
- 19: Öffnung
- 21: Faltenbalg
- 23: Rollbalg
- 25: Dichtwulst
- 27: Nut
- 29: Dichtwulst
- 31: Deckel
- 33: O-Ring
- 35: Rückstellfeder
- 37: Außenschulter

## Patentansprüche

1. Bremszylinder für Scheibenbremsen, insbesondere von Nutzfahrzeugen, mit einem vorzugsweise mittels eines Stößels aus dem Gehäuse des Bremszylinders sich erstreckenden Druckstück, welches auf Betätigungsorgane einer an den Bremszylinder angeflanschten Scheibenbremse einwirkt, dadurch gekennzeichnet, daß das Druckstück (9) im Inneren des Bremszylinders von einer Balgdichtung (13) umgeben ist, wobei ein Ende der Balgdichtung als Dichtwulst (25) das Druckstück (9) umschließt, während das entgegengesetzte Ende der Balgdichtung (13) gleichfalls einen Dichtwulst (29) trägt, welcher auf den Innenumfang der vom Druckstück bzw. vom Stößel (11) durchsetzten Öffnung des Bremszylinders aufgeknüpft ist, und daß der Dichtwulst (29) im Inneren des Bremszylinders als Zentrierung für eine die Balgdichtung umgebende Rückstellfeder (35) dient.

2. Bremszylinder nach Anspruch 1, dadurch gekennzeichnet, daß die Balgdichtung als Faltenbalg (21) ausgebildet ist.

3. Bremszylinder nach Anspruch 1, dadurch gekennzeichnet, daß die Balgdichtung als Rollbalg (23) ausgebildet ist.

4. Bremszylinder nach Anspruch 1, dadurch gekennzeichnet, daß der das Druckstück umschließende Dichtwulst (25) und der am entgegengesetzten Ende der Balgdichtung befindliche Dichtwulst (29) materialeinheitlich mit dem Balgkörper ausgebildet sind, wobei der am Deckel (31) des Bremszylinders aufgeknüpfte Dichtwulst (29) die Form eines O-Rings, eines Vierkant-Rings etc. vergleichbaren Dichtelements besitzt.
